# EUROPEAN PATENT APPLICATION

(11) **EP 1 059 213 A2**
(43) Date of publication of application: **13.12.2000**
(21) Application number: 00110876.0
(22) Date of filing: 23.05.2000
(51) Int. Cl.: B60S 1/38

(54) **Silicone rubber-based wiper blade for vehicle windows**

(30) Priority: 07.06.1999 JP 15922099
(71) Applicant: SHIN-ETSU POLYMER CO., LTD., Tokyo (JP)
(72) Inventor: Miyauchi, Katsumi, c/o Shin-Etsu Polymer Co., Ltd., Omiya-shi, Saitama-ken (JP); Shizukuda, Yoshinari, Shin-Etsu Polymer Co., Ltd., Omiya-shi, Saitama-ken (JP); Hiruma, Nobuyuki, c/o Shin-Etsu Polymer Co., Ltd., Omiya-shi, Saitama-ken (JP); Takahashi, Masahide, Shin-Etsu Polymer Co., Ltd., Omiya-shi, Saitama-ken (JP)
(74) Representative: Hössle, Markus, Dipl.-Phys.

(57) **Abstract**

Disclosed is an improved wiper blade (1) of rubber for automobiles which is serviceable even on a glass (6) surface having a water-repellent coating film without destroying the coating film for a long time. The wiper blade (1) characteristically has a lip portion (4) made from a silicone rubber and provided on both side surfaces each with a wiping layer (7) coming into contact with the glass (6) surface, which consists of a specified deposition density of particles of silica, graphite and the like having a specified particle size distribution and bonded to the side surface of the lip portion (4) with a silicone rubber composition as in a coating layer of a cured silicone rubber containing the particles.

## Description

### BACKGROUND OF THE INVENTION

The present invention relates to a novel silicone rubber-based wiper blade for windows of transportation vehicles such as automobiles or, more particularly, to a wiper blade made from a silicone rubber and capable of efficiently wiping off any rain drops, muddy water drops, snow and sleet flakes and dust particles to ensure a good view field of the drivers and pilots of the vehicle.

It is usual that the windows of a variety of transportation vehicles such as automobiles, train cars, ships and aircrafts are provided not only on the windshields but also on the rearward windows each with one or a plurality of window wipers having a rubber-made wiper blade, which is moved reciprocatingly on and in contact with the surface of the glass pane of the window to remove the water drops, dust particles and the like deposited on the glass surface, as supported by a wiper arm usually made from a metallic material to hold the rubber-made wiper blade.

While the wiper blades mentioned above are made in most cases from natural rubber, other types of rubbers, i.e. synthetic rubbers, are also used therefor including polychloroprene rubbers, styrene-butadiene copolymeric rubbers, EPDM rubbers and others either singly or as a blend of two kinds or more.

On the other hand, it is widely practiced in recent years in order to ensure an improved view field of the drivers even under a heavy rain fall that the glass surface of the window pane is imparted with water repellency by coating with a water-repellent agent so that the glass surface coated with a water-repellent coating film exhibits a contact angle of 90° or larger with water drops.

The rain drops deposited on the glass surface in the windshield of automobiles readily roll down on the surface provided with a water-repellent coating film when the automobile is stopped and, during running of the automobile, the rain drops are readily scattered off by the wind pressure so that the window panes can be kept in a good see-through condition even without vigorously driving the window wipers. Since the water-repellent treatment of the window pane surface can never be almighty, however, the window wipers must be operated for removing foreign materials other than water drops deposited on the glass surface. Accordingly, it is unavoidable that the water-repellent coating film on the surface is gradually shaved off by repeated rubbing with the rubber-made wiper blade resulting in the disappearance of water repellency unless the treatment with a water-repellent agent is repeated frequently. Another problem involved in the water-repellent treatment of the glass surface is that, when the rubber-made wiper blade is moved on the surface having the water-repellent coating film partially shaved off, chattering is sometimes unavoidable in the movement of the wiper blade resulting in complete loss of smoothness in moving.

As a result of the investigations to solve the above described problems, the inventors have arrived at a discovery, which was previously disclosed in Japanese Patent Kokai 11-321573, that a greatly improved window wiper could be provided when the wiper blade held by the wiper arm was prepared by utilizing a silicone compound, by use of which the durability of the water-repellent effect of the glass surface could be improved so that good water-repellency of the surface could be maintained even by greatly decreasing the frequency for the repetition of the water-repellent treatment of the surface. Along with the recently increasing requirement for quietness of automobiles as an environmental problem, the above mentioned improvement is deemed to be insufficient and development is eagerly desired for a wiper blade which ensures still higher quietness or lower noisees in wiping with improved slidability on a glass surface.

### SUMMARY OF THE INVENTION

The present invention accordingly has an object, in view of the above described problems and disadvantages relative to the conventional rubber-made wiper blades, to provide an improved rubber-made wiper blade for transportation vehicles, which is less responsible for the troubles of shaving off of the water-repellent coating film on the surface of the window pane along with further improved quietness in wiper movement.

Thus, the wiper blade for transportation vehicles provided by the present invention is an integral body made from a rubbery material, of which at least the lip portion is made from a silicone rubber, which comprises a wiping layer on each of the side surfaces of the lip portion to come into contact with a glass surface, when the wiper blade is in operation, formed from a silicone rubber composition as a bonding agent of particles having a particle size distributing in the range from 0.3 to 60 µm and a median particle diameter in the range from 2 to 15 µm, the amount of the bonded particles being in the range from 1 to 20 mg per cm² of the wiping layer and the amount of the silicone rubber composition for bonding of the particles being in the range from 0.3 to 10 mg per cm² of the wiping layer.

### BRIEF DESCRIPTION OF THE DRAWING

Figure 1 is a schematic cross sectional view of the inventive wiper blade as cut and viewed perpendicularly to the lengthwise direction.
Figure 2 is a schematic partial enlargement of the cross sectional cross section of the inventive wiper blade showing the lip portion.

### DETAILED DESCRIPTION OF THE PREFERRED EMBODIMENTS

The wiper having the above defined wiper blade is particularly useful for use on a window pane of vehicles which is provided with a water-repellent coating film formed by using a water-repellent coating composition based on an alkoxysilane compound or, preferably, from a trialkoxysilane compound such as trimethoxy- and triethoxysilanes. The water repellency of the water-repellent agent is exhibited by methyl groups and/or fluoroalkyl groups of the general formula CF₃(CF₂)ₙCH₂CH₂-, in which the subscript n is preferably 0 or a positive integer not exceeding 8. The water-repellent composition can optionally be admixed with a catalytic amount of a strongly acidic or alkaline compound as a catalyst with an object to promote the hydrolysis reaction of the alkoxysilane compound and to enhance the bonding strength of the hydrolyzate to the glass surface. The catalytic compound can be selected from hydrochloric acid, nitric acid, sulfuric acid, aromatic and aliphatic sulfonic acids, sodium hydroxide, potassium hydroxide and the like.

The water-repellent composition is prepared and used usually in the form of a uniform solution in an organic solvent which is preferably an alcoholic compound such as methyl alcohol, ethyl alcohol n-propyl alcohol, isopropyl alcohol and the like.

In the following, the wiper blade of the present invention is described in detail by making reference to the accompanying drawing.

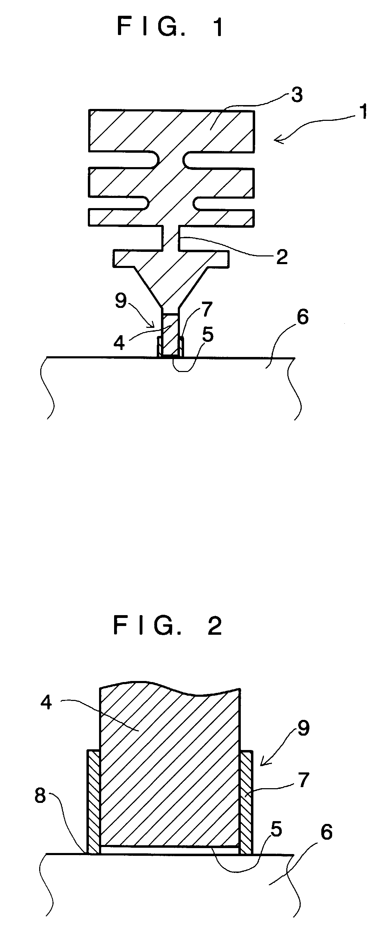

Figure 1 schematically illustrates a cross sectional view of a typical example of the inventive wiper blade 1 as cut and viewed perpendicularly to the lengthwise direction of the wiper blade 1 generally in a configuration of an elongated bar body, of which the base part 3 of a rubbery material is provided with a necking 2 to ensure elastic deformation of the base part 3 when the wiper blade 1 is moved on the surface of a glass pane 6 of a transportation vehicle having a water-repellent coating film in contact therewith at the contacting edge surface 5 of the lip portion 4 integrally bonded together to the lower end of the base part 3. The base part 3 including the lip portion 4 can be shaped by molding vulcanization of a single kind of rubbery materials in an integral form but it is essential that at least the lip portion 4 is made from a silicone rubber.

Figure 2 is an enlarged partial cross sectional view of the same wiper blade showing the lower edge part 9 of the lip portion 4, which is provided on both side surfaces with wiping layers 7,7 each of which is downwardly extended slightly beyond the lower end surface 5 of the lip portion 4 by at least 0.5 mm or, preferably, at least 1.0 mm so that the lower end surface 5 of the lip portion 4 is no longer in direct contact with the glass surface but keeps a very thin space therebetween. Namely, the wiper blade 1 is in contact with the glass surface at the lower ends of the wiping layers 7,7 and the water drops on the glass surface are wiped off by the ridge lines 8,8 of the wiping layers 7,7.

A convenient process for the preparation of the above illustrated wiper blade is that a two-piece continuum of the base parts 3,3 is prepared by a single molding-vulcanization of a rubbery material as connected together at the respective lower end surfaces 5,5 of the lip portions 4,4 and the wiping layers 7,7 of a specific silicone rubber composition bonding together particles are formed on both surfaces of the lip portions 4,4 followed by cutting the continuum along the center line of the lip portions 4,4 connected together thus to give two separate pieces of the wiper blades 1,1 although it is optional that the wiping layers 7,7 are formed not on a continuum of two pieces but on a single piece after cutting apart of the two-piece continuum or prepared by a single-piece molding. No particular problems are caused even when the end portion of the wiping layer 7 is not orthogonal but has a cross section somewhat spreading toward the end surface 5 of the lip portion 4. It is not necessary that each of the wiping layers 7,7 on both side surfaces of the lip portion 4 covers the whole side surface of the lip portion 4 but the wiping layer 7 can be formed only on the lower part of the side surface.

While it is essential that the base part 3 including the lip portion 4 of the wiper blade 1 or at least the lip portion 4 is made from a silicone rubber, the wiping layers 7,7 are formed from a silicone rubber-based composition comprising a particulate material having a specified particle size distribution and a silicone rubber to serve as a binder of the particulate material. Namely, the particulate material has a particle size distribution in the range from 0.3 to 60 µm and a median particle diameter in the range from 2 to 15 µm.

The above mentioned parameter of the particle size distribution refers to the value obtained by the sedimentation method, which is the most conventional method for the determination of the particle size distribution, by utilizing the principle that the settling velocity of particles in a fluid depends on the diameter of the particles. Namely, the density of the particles in a dispersion of the particles in a liquid is periodically determined in the lapse of time and the results are used for calculation of the particle size distribution.

The methods for the determination of the particle density in a dispersion are classified into the cumulative methods, in which the overall content of the particles in the portion of the dispersion above or below a level of height H is determined, and the increment methods, in which the content of the particles is determined only for a small volume at the height H. The content of particles in the cumulative methods can be determined by the sedimentation balance method, specific gravimeter method or pressure method while the pipette method, specific gravity balance method, light transmission method or X-ray transmission method can be applied to the increment methods. In practicing the present invention, the particle size distribution is determined by applying the light transmission method to the increment method by utilizing centrifugal settling under measurement conditions including the temperature of 23±2°C and relative humidity of 50±10% with distilled water as the dispersion medium.

The base part 3 of the wiper blade 1 is made from a rubbery material which is not particularly limitative and can be any of known rubbery materials conventionally employed for molding wiper blades in the prior art including general-purpose rubbers such as natural rubber, polychloroprene rubbers and EPDM rubbers as well as a silicone rubber which may be the same one as or different from the silicone rubber for the lip portion 4. The rubbery material forming the base part 3 of the wiper blade 1 is preferably has a rubber hardness of 50 to 80 degrees as determined by using the durometer, type A, specified in JIS K 6253.

The lip portion 4 is formed by molding a silicone rubber composition which may optionally be compounded with a reinforcing filler and an additive for improving the sliding smoothness of the wiper blade on a glass surface.

One of the base ingredients in a silicone rubber composition is an organopolysiloxane gum of a high molecular weight exemplified by dimethyl silicone gums, methyl vinyl silicone gums, methyl phenyl vinyl silicone gums and fluorosilicone gums, which can be used either singly or as a blend of two kinds or more. It is preferable that the silicone rubber composition for the lip portion 4 gives a cured silicone rubber parts having a rubber hardness of 50 to 80 degrees as determined by using the durometer, type A, specified in JIS K 6253 since otherwise the wiper with the wiper blade 1 cannot exhibit high performance as desired.

The other of the essential ingredients in the silicone rubber composition forming the lip portion 4 is a reinforcing filler which serves to greatly improve the mechanical strengths of the cured silicone rubber member obtained by curing the silicone rubber composition. The reinforcing filler is typically a precipitated or fumed silica filler having an average particle diameter in the range from 5 nm to 30 nm. The loading amount of the reinforcing filler in the silicone rubber composition is desirably in the range from 10 to 25% by volume. When the loading amount of the reinforcing filler is too small, the cured silicone rubber cannot be imparted with fully improved mechanical strengths as a matter of course while, when the loading amount thereof is too large, difficulties are encountered in the preparation of the silicone rubber composition and in the molding works thereof.

The silicone rubber composition can be cured when heated under compression by the activity of the curing or vulcanizing agent contained in the composition. A variety of organic peroxide compounds are usually used as the curing agent including dicumyl peroxide, dibenzoyl peroxide and 2,5-dimethyl-2,5-bis(tert-butylperoxy) hexane for ordinary types of silicone rubber compositions although silicone rubber compositions curable by different mechanisms may require different curing agents which may be a combination of an organohydrogenpolysioxane compound and a platinum compound as a catalyst when the composition is curable by the mechanism of the hydrosilation reaction for crosslink formation.

The lip portion 4 is provided on both side surfaces of the lower end part thereof each with a wiping layer 7 at which the wiper blade 1 comes into contact with the surface of a glass pane 6 exhibiting improved wiping behavior for water drops to ensure improved durability of the water-repellent coating film on the glass surface. The wiping layer 7 is formed by coating with a silicone rubber-based coating composition comprising a particulate material and a silicone rubber which serves as a binder of the particulate material to immobilize the particles on the surface of the lip portion 4. It is important that each of the wiping layers 7,7 on one of the side surfaces of the lip portion 4 is downwardly extended beyond the level of the lower end surface 5 of the lip portion 4 so that, when the wiper blade 1 is in contact with the surface of a glass pane 6, a flat void space of a very small thickness is formed therebetween. The downward extension of the wiping layer 7 beyond the lower end of the lip portion 4 should be at least 0.5 mm or, preferably, at least 1.0 mm. Such an extension can be formed by the method of coating with the silicone rubber-based coating composition containing the particulate material.

The particulate material of which the particles should appear on he surface of the wiping layer 7 is not particularly limitative including particles of fluorocarbon resins, graphite, micas, silica, calcium carbonate and calcium silicate, which can be used either singly or as a combination of two kinds or more.

The particle configuration of the particles can be irregular, flaky, spherical, porous-spherical or hollow-spherical without particular limitations. When the particulate material has a spherical, porous-spherical or hollow-spherical particle configuration as in silica powders, the particles should desirably have a particle size distribution of 0.3 to 30 µm with a median particle diameter in the range from 2 to 15 µm. When the particulate material has a flaky particle configuration as in graphite powders, the particles should desirably have a particle size distribution of 0.3 to 60 µm with a median particle diameter in the range from 2 to 15 µm. When the particulate material is a silica powder having a spherical, porous-spherical or hollow-spherical particle configuration and the particle size distribution is too fine, troubles are encountered in the preparation of and coating works with the coating composition compounded with the powder while, when the particle size distribution is too coarse, water drops adhering to the glass surface cannot be removed completely by wiping with the wiper blade as a consequence of the imperfect contacting condition with the wiping layers 7,7.

When the median diameter of the particles is too small, no substantial improvement can be obtained in the slidability of the wiper blade on the glass surface while, when the median diameter is too large, water drops adhering to the glass surface cannot be removed completely by wiping with the wiper blade as a consequence of the imperfect contacting condition with the wiping layers 7,7.

Similar disadvantages are resulted with a particulate material having a flaky particle configuration as in graphite powders when the particle size distribution is too fine or too coarse and the median diameter is too small or too large.

The reason for the difference in the preferable ranges mentioned above between spherical particles and flaky particles is presumably as follows. When the particulate material has a spherical particle configuration, for example, particles having a particle diameter exceeding 30 µm are brought into contact in the formation of the wiping layer 7 in a condition of point-contacting leaving interstitial spaces between particles, which are filled, sometimes incompletely, with fine particles smaller in size than the interstitial spaces. In a particulate material having a flaky particle configuration, on the other hand, as in graphite powders, the particles lay flat in the wiping layer 7 and overlap with adjacent particles like an arrangement of fish scales so that little interstitial spaces are left between the particles.

It is preferable that the silicone rubber composition which serves as a binder of the above described particles gives a cured silicone rubber having a rubber hardness in the range from 40 to 70 degrees by the measurement with a durometer, type A, specified in JIS K 6252. When the hardness of the cured silicone rubber is too low, smoothness in sliding of the wiper blade 1 on the glass surface can hardly be ensured. When the hardness of the cured silicone rubber is too high, the rubber surface is liable to be scratched by the foreign bodies such as dust particles on the glass surface when the wiper blade 1 is moved thereon so that a small volume of water is unavoidably left unremoved on the surface forming a streaky pattern.

The organopolysiloxane gum of a high molecular weight as a base ingredient of the silicone rubber composition for the wiping layer 7 is not particularly limitative including dimethyl silicone gums, methyl vinyl silicone gums, methyl phenyl vinyl silicone gums and fluorosilicone gums, which can be used either singly or as a blend of two kinds or more.

The silicone rubber composition for the wiping layer 7 is also compounded with a reinforcing filler, which is preferably a finely divided silica filler having an average particle diameter in the range from 5 to 30 nm, in a loading amount of 10 to 20% by volume. When the loading amount of the reinforcing filler is too small, no sufficient reinforcing effect can be obtained on the mechanical properties of the cured silicone rubber while, when the loading amount of the reinforcing filler is too large, difficulties are encountered in the preparation of and coating works with the coating composition for the formation of the wiping layer 7. The curing agent in the silicone rubber composition for the wiping layer 7 can be the same one as or a similar one to that used in the silicone rubber composition for the formation of the lip portion 4 described above.

The bonding amount of the wiping layer 7 to the side surface of the lip portion 4 is selected basically in relation to the amount of the particulate material bonded by the silicone rubber composition to serve as a binder, which should be in the range from 1 to 20 mg per cm² of the wiping layer 7. When the bonding amount of the particles is too small, no substantial improvement can be obtained in the sliding behavior of the wiper blade 1 on the glass surface. When the bonding amount of the particles is too large, the wiping performance of the wiper blade 1 on the glass surface is adversely affected.

The amount of the particles bonded in the wiping layer 7 on the surface of the lip portion 4 can be estimated in the following manner. When the particles are put onto the surface of the lip portion 4 followed by immobilization with the silicone rubber composition, the amount of the particles can be calculated from the difference in weights without and with the particles put thereon. When the wiping layer 7 is formed on the side surface of the lip portion 4 by spray coating with a liquid coating composition which is a dispersion of the particles and the silicone rubber composition in an organic solvent, as in Example 4 described later, the amount of the particles can be calculated from the difference in weights before coating and after coating and drying taking into account the content of the particles in the coating composition.

Similarly, the amount of the silicone rubber composition for bonding of the particles should preferably be in the range from 0.3 to 10 mg/cm². When the amount thereof is too small, the particles cannot be fully bonded onto the surface of the lip portion 4 leading to eventual faling of the particles from the layer 7 while, when the amount is too large, the wiping layer 7 cannot exhibit good sliding behavior although bonding of the particles can be complete.

The wiping layer 7 preferably has a thickness in the range from 5 to 30 µm. When the thickness of the wiping layer 7 is too small, the wiper blade 1 suffers a decrease in the durability or service life even though no problems are caused in the sliding behavior at the initial stage of use. When the thickness of the layer 7 is too large, on the other hand, the wiping layer 7 is under a risk of crack formation eventually leading to a decrease in the performance of the wiper blade. 1

As is mentioned above, the particles can be bonded onto the side surface of the lip portion 4 at the lower end part to form a wiping layer 7 by a method in which the particles are first deposited as such on the surface in an appropriate density and the particles are coated with the silicone rubber composition to be embedded therein followed by curing of the silicone rubber composition. Alternatively, the particles are dispersed in a silicone rubber composition to give a particle-containing silicone rubber composition in the form of a liquid coating composition with which the surface of the lip portion 4 is coated in an appropriated coating thickness followed by curing of the silicone rubber composition.

Deposition of the particles on the surface can be performed by using various types of tumbling barrels or by using a powder coating machine. The silicone rubber composition to cover the thus deposited particles is applied thereto by the method of spray coating with or dipping in the composition in the form of a coating liquid prepared by dissolving or dispersing the silicone rubber composition of an appropriate concentration in a suitable organic solvent such as toluene.

The wiping layer 7 can also be formed by coating the surface with a particle-containing silicone rubber composition prepared by dispersing the particles in a liquid dispersion of the silicone rubber composition utilizing a coating method of dipping, spraying or pressing.

In a typical formulation of the particle-containing silicone rubber composition for the formation of the wiping layer 7 on the side surface of the lip portion 4 of the wiper blade 1, 5 parts by weight of the particles are added to and dispersed in 100 parts by weight of a liquid dispersion containing 3% by weight of the silicone rubber composition in toluene. The surface of the lip portion 4 is coated with this liquid dispersion in a coating amount to give an amount of the deposited particles in the range from 1 to 20 mg/cm² and a coating amount of the silicone rubber composition in the range from 0.3 to 10 mg/cm², though not particularly limitative thereto. The thus formed layer of the particle-containing silicone rubber composition is, after evaporation of the solvent, subjected to curing of the silicone rubber composition by a heat treatment at 150 to 200°C for 5 to 30 minutes.

The molding method for the preparation of the wiper blade body 1 is not particularly limitative including compression molding, extrusion molding and injection molding. The methods of composite compression molding, multilayer extrusion molding and composite injection molding can naturally be employed when the wiper blade body 1 is formed from two kinds or more of rubbery materials for the base part 3 and the lip portion 4 although the parts are shaped separately from the respective rubbery materials followed by adhesive bonding together.

The conditions of molding of a rubbery material for the preparation of the wiper blade body 1 naturally depend on the types of the rubbery material. When the rubbery material is a silicone rubber composition, the molding temperature should be in the range from 150 to 190°C or, preferably, from 160 to 180°C in the compression molding or injection molding. When molding is conducted by extrusion molding, the elongated body as extruded out of the extruder die is introduced continuously into a vulcanizing oven kept at a temperature in the range from 200 to 400°C depending on the staying time of the body in the oven.

When the curing agent or vulcanizing agent contained in the silicone rubber composition is an organic peroxide, it is preferable that the molded body obtained as above is subjected to a secondary curing treatment at a temperature of 180 to 210°C for 1 to 4 hours in an oven equipped with a compulsory ventilation system so that the unreacted vaporizable matters in the molded body are removed resulting in an increase and stabilization of the mechanical properties.

It is a preferable way for molding the wiper blade body 1 that a process of two-piece molding is undertaken to prepare a continuum of two bodies conjoined along the ends 5,5 of the lip portions 4,4 followed by cutting of the continuum into two separate bodies 1,1 in view of the sharpness of the edge lines formed by cutting apart.

In the following, the wiper blade of the present invention is described in more detail by way of Examples and Comparative Examples although the scope of the invention is never limited thereto in any way.

Evaluation of the wiper blades prepared in the Examples and Comparative Examples was undertaken according to the following testing procedures by using a testing machine specified in JIS D 5710.

### Test 1 (wiping performance)

The surface of the glass plate mounted on the testing machine was treated with an organosilane-based water-repellent agent (Cho Garako, a product by Soft 99 Corp.) and kept standing for 24 hours. Thereafter, the wiper blade under testing mounted on the testing machine was driven in contact with the glass surface which was either dry or wet by sprinkling water at a rate of 500 ml/minute evenly over the area for wiping to record the relative value of the electric current for driving the wiper as the wiping performance index taking the value obtained in Comparative Example 1 using a wiper blade of natural rubber as 100. A smaller value of this index obtained in this way means a better sliding behavior of the wiper blade on the dry or wet glass surface.

### Test 2 (durability test)

The surface of the glass plate on the testing machine was subjected to the water-repellent treatment in the same manner as in Test 1 described above. After 24 hours standing, the durability test of the wiper blade on the glass surface under the wet condition as above was started at a wiping frequency of 40 times/minutes to conduct a periodical visual inspection of the condition of the water-repellent coating film on the glass surface up to 300000 times repetion of wiping. The condition of the water-repellent coating film was recorded in three ratings of Good, Fair and Poor according to the following criteria.
Good: no removal of the coating film, excellent wiping performance
Fair: 20% or less removal of the coating film, wiping performance inferior to some extent
Poor: more than 20% removal of the coating film, poor wiping performance

### Example 1.

A curable silicone rubber composition, capable of giving a cured silicone rubber having a hardness of 68 degrees by the JIS A scale, in the form of a sheet was prepared by thoroughly blending 100 parts by weight of a silicone rubber compound (KE 571U, a product by Shin-Etsu Chemical Co.) with 2 parts by weight of a curing agent supplied by the same company (C-8, a silicone oil-based paste of 2,5-dimethyl-2,5-bis(2-butylperoxy) hexane) on a two-roller mill followed by sheeting. This silicone rubber composition was subjected to compression molding in a metal mold for two-piece molding at 170°C for 4 minutes to give a continuum of two wiper blade bodies jointed together along the end surfaces of the respective lip portions followed by a secondary curing treatment at 200°C for 2 hours in an oven equipped with a compulsory ventilation system.

In the next place, the thus prepared continuum was tumbled in a tumbling barrel together with a powder of spherical porous silica particles, of which the particle size distribution was in the range from 0.5 to 18 µm and the median diameter was 4 to 6 µm as determined by the sedimentation method (Goldball E-16C, a product by Suzuki Oil & Fat Industry Co.) so as to accomplish adherence of the particles to the surface of the lip portions in an average amount of deposition of 2 mg/cm². The conjoined lip portions of the continuum bearing deposition of the silica particles were spray-coated with a 3% by weight toluene solution of a silicone rubber composition, capable of giving a cured silicone rubber having a hardness of 50 degrees by the JIS A scale, based on a silicone gun having an average degree of polymerization of 7000 to 8000 and consisting randomly of the dimethylsiloxane units and methylvinylsiloxane units in molar fractions of 99.85% and 0.15%, respectively, in an average coating amount of 0.6 mg/cm² as dried followed by a heat treatment at 180°C for 10 minutes to form wiping layers. Thereafter, the continuum was cut apart along the conjoining center line by using a pair of rotary cutter blades upper and lower to give two separate wiper blades 1, in which the wiping layer 7 was extended by 1.0 mm beyond the end surface 5 of the lip portion 7.

The thus prepared wiper blades were subjected to the evaluation tests to give the results that the wiping performance indices were 92 and 97 for the dry and wet testing conditions, respectively, and the condition of the water-repellent coating film in the durability test was rated Good for up to 300000 times repeated wiping.

### Example 2.

The procedure for the preparation of wiper blades was substantially the same as in Example 1 except that the secondary curing treatment was conducted not before deposition of the silica particles but after formation of the wiping layers 7 on the side surfaces of the lip portion 4.

The results of the evaluation tests of the wiper blades were that the wiping performance indices were 90 and 97 for the dry and wet testing conditions, respectively, and the condition of the water-repellent coating film in the durability test was rated Good for up to 300000 times repeated wiping.

### Example 3.

The procedure for the preparation of wiper blades was substantially the same as in Example 1 excepting for the replacement of the spherical porous silica particles with the same amount of another grade of spherical hollow porous silica particles having a particle size distribution of 0.5 to 25 µm and a median diameter of 12 to 14 µm (Goldball B-25C, a product by the same company, *supra*). The wiping layers consisting of the silica particles and the bonding silicone rubber composition had an average thickness of 20 µm.

The results of the evaluation tests of the wiper blades were that the wiping performance indices were 88 and 95 for the dry and wet testing conditions, respectively, and the condition of the water-repellent coating film in the durability test was rated Good for up to 300000 times repeated wiping.

### Example 4.

The procedure for the preparation of wiper blade bodies was just the same as in Example 1.

Separately, a silica particle-containing coating composition was prepared by adding and dispersing, under thorough agitation, in 100 parts by weight of a toluene solution containing 3% by weight of the same silicone rubber composition as used in Example 1 for bonding of the silica particles, 5 parts by weight of the same silica particles (Goldball E-16C, *supra*), 2 parts by weight of a pigment (K-Color-BK-02, a product by Shin-Etsu Chemical Co.) and 0.02 part by weight of a platinum catalyst (CAT-PL-2-10, a product by Shin-Etsu Chemical Co.).

The two piece-molded wiper blade bodies as a continuum were coated on the conjoined lip portions 4,4 by spray coating with the above prepared coating composition followed by drying and a curing heat treatment at 180°C for 10 minutes to give wiping layers 7,7 having an average thickness of 20 µm consisting of 2 mg/cm² of the silica particles and 0.6 mg/cm² of the silicone rubber composition.

The results of the evaluation tests of the wiper blades were that the wiping performance indices were 87 and 95 for the dry and wet testing conditions, respectively, and the condition of the water-repellent coating film in the durability test was rated Good for up to 300000 times repeated wiping.

### Example 5.

The procedure for the preparation of wiper blades was substantially the same as in Example 1 excepting for the replacement of the silicone rubber compound KE 571 U with the same amount of another silicone rubber compound which was prepared by kneading, in a pressurizable kneader, 100 parts by weight of a silicone rubber compound (KE 1541U, a product by Shin-Etsu Chemical Co.) and 35 parts by weight of a diatomaceous earth. This diatomaceous earth-compounded silicone rubber composition after admixture of the curing agent gave a cured silicone rubber having a hardness of 72 degrees according to the JIS A scale.

The results of the evaluation tests of the wiper blades were that the wiping performance indices were 90 and 96 for the dry and wet testing conditions, respectively, and the condition of the water-repellent coating film in the durability test was rated Good for up to 300000 times repeated wiping.

### Example 6.

The procedure for the preparation of wiper blades was substantially the same as in Example 1 except that the wiper blade bodies were prepared in the form of a two-piece continuum by the multilayer extrusion molding method from the same diatomaceous earth-containing silicone rubber composition as used in Example 5 for the lip portions 4,4 and from the same silicone rubber composition as used in Example 1 for the rest of the wiper blade bodies.

The results of the evaluation tests of the wiper blades were that the wiping performance indices were 92 and 97 for the dry and wet testing conditions, respectively, and the condition of the water-repellent coating film in the durability test was rated Good for up to 300000 times repeated wiping.

### Example 7.

The procedure for the preparation of wiper blades was substantially the same as in Example 4 except that the combination of 3 parts by weight of silica particles and 2 parts by weight of the pigment was replaced with 5 parts by weight of flaky particles of natural graphite having a particle size distribution of 1 to 55 µm as dried and a median diameter of 10 µm (BF-10A, a product by Chuetsu Graphite Industry Co.). The wiping layers 7,7 formed by spray-coating with the coating composition had an average thickness of 20 µm and the amount of the deposited graphite particles was 2 mg/cm².

The results of the evaluation tests of the wiper blades were that the wiping performance indices were 85 and 93 for the dry and wet testing conditions, respectively, and the condition of the water-repellent coating film in the durability test was rated Good for up to 300000 times repeated wiping.

### Example 8.

The procedure for the preparation of wiper blades was substantially the same as in Example 7 excepting for the replacement of the graphite particles with the same amount of another grade of flaky graphite particles having a particle size distribution of 1 to 25 µm and a median diameter of 5 µm (BF-5A, a product by the same company, *supra*).

The results of the evaluation tests of the wiper blades were that the wiping performance indices were 87 and 94 for the dry and wet testing conditions, respectively, and the condition of the water-repellent coating film in the durability test was rated Good for up to 300000 times repeated wiping.

### Comparative Examples 1 and 2.

Two commercial products of natural rubber-made wiper blades (each a product by Japan Wiper Blade Co.) respectively recommended for use on an automobile windshield without (Comparative Example 1) or with (Comparative Example 2) a water-repellent treatment were subjected to the evaluation tests.

The result of the durability test in Comparative Example 1 was that the condition of the water-repellent coating film was rated Fair for up to 100000 times repeated wiping but thereafter Poor.

The results of the evaluation tests in Comparative Example 2 were that the wiping performance indices were 97 and 98 for the dry and wet testing conditions, respectively, and the condition of the water-repellent coating film in the durability test was rated Good for up to 50000 times and Fair for up to 150000 times repeated wiping and thereafter Poor.

### Comparative Example 3.

Wiper blades were prepared in the same manner as in Example 1 from the diatomaceous earth-containing silicone rubber composition prepared and used in Example 5 and the wiper blades were subjected to the evaluation tests without forming the wiping layers on the respective lip portions.

The results of the evaluation tests were that the wiping performance indices were 120 and 99 for the dry and wet testing conditions, respectively, and the condition of the water-repellent coating film in the durability test was rated Good for up to 250000 times repeated wiping and thereafter Fair.

### Comparative Example 4.

The procedure for the preparation of wiper blades was substantially the same as in Example 1 excepting for the replacement of the spherical porous silica particles with the same amount of another grade of spherical porous silica particles having a particle size distribution of 0.5 to 3 µm and a median diameter of 1.0 µm (Goldball E-2C, a product by the same company, *supra*).

The results of the evaluation tests were that the wiping performance indices were 110 and 98 for the dry and wet testing conditions, respectively, and the condition of the water-repellent coating film in the durability test was rated Good for up to 300000 times repeated wiping.

### Comparative Example 5.

The procedure for the preparation of wiper blades was substantially the same as in Example 7 except that the deposited amount of the silica particles in the wiping layers, which had a thickness of 3 µm, was decreased from 2 mg/cm² to 0.3 mg/cm² and the amount of the bonding silicone rubber composition was 0.1 mg/cm².

The results of the evaluation tests were that the wiping performance index was 97 for each of the dry and wet testing conditions and the condition of the water-repellent coating film in the durability test was rated Good for up to 150000 times repeated wiping and thereafter Fair.

## Claims

1. A wiper blade for transportation vehicles as an integral body made from a rubbery material, of which at least the lip portion is made from a silicone rubber, which comprises a wiping layer on the side surface of the lip portion, which comes into contact with a glass surface when the wiper blade is in operation, formed from a silicone rubber composition as a bonding agent of particles having a particle size distributing in the range from 0.3 to 60 µm and a median particle diameter in the range from 2 to 15 µm, the amount of the bonded particles being in the range from 1 to 20 mg per cm² of the wiping layer and the amount of the silicone rubber composition for bonding of the particles being in the range from 0.3 to 10 mg per cm² of the wiping layer.

2. The wiper blade as claimed in claim 1 in which the silicone rubber forming the lip portion has a rubber hardness in the range from 50 to 80 degrees according to the JIS A scale.

3. The wiper blade as claimed in claim 1 in which the particles bonded in the wiping layer are particles of a material selected from the group consisting of fluorocarbon resins, graphite, mica, silica, calcium carbonate and calcium silicate.

4. The wiper blade as claimed in claim 1 in which the silicone rubber composition for bonding of the particles in the wiping layer gives a cured silicone rubber having a rubber hardness in the range from 40 to 70 degrees according to the JIS A scale.

5. The wiper blade as claimed in claim 1 in which the wiping layer on the lip portion has a thickness in the range from 5 to 30 µm.

6. The wiper blade as claimed in claim 1 in which the wiping layer is a coating layer of a cured silicone rubber composition containing the particles.

7. The wiper blade as claimed in claim 1 in which the wiping layer is formed on each of the side surfaces of the lip portion.

8. The wiper blade as claimed in claim 1 in which the wiping layer on the side surface of the lip portion is extended beyond the end surface of the lip portion by a length of at least 0.5 mm.
